# EUROPEAN PATENT APPLICATION

(11) **EP 4 545 662 A1**
(43) Date of publication of application: **30.04.2025**
(21) Application number: 24205817.0
(22) Date of filing: 10.10.2024
(51) Int. Cl.: C22B 3/00, C22B 7/00, H01M 10/54

(54) **CADMIUM REMOVAL IN LITHIUM-ION BATTERY RECYCLING**

(30) Priority: 27.10.2023 US 202318496481
(71) Applicant: II-VI Delaware, Inc., Wilmington, DE 19890 (US)
(72) Inventor: NAZARI, Ghazaleh, Wilmington, 19890 (US); ABRENICA, Gomer M., Wilmington, 19890 (US); Gluck, Eugen, Wilmington, 19890 (US); Grimaldo, Mary Loisse, Wilmington, 19890 (US); Pagulayan, Jolina, Wilmington, 19890 (US); Gerona, Joseph Holden, Wilmington, 19890 (US)
(74) Representative: Tegethoff, Sebastian

(57) **Abstract**

A battery recycling method removes impurities to ensure production of battery-grade materials. The method includes removing cadmium (Cd) from a pregnant leach solution before recovering valuable battery metals such as nickel (Ni), manganese (Mn), cobalt (Co), and lithium (Li). The removal of the Cd may be performed by precipitating an insoluble organo-complex by adding an organic compound material to the pregnant leach solution. The organic compound material may include one or more of organosulfur, organothiophosphate, benzothiazole compounds or derivatives, such as dithiophosphinate, dithiophosphate, and mercaptobenzothiazole, respectively.

## Description

### Background

Lithium-ion batteries (LiBs) are expected to have the largest growth in several applications, particularly in electric vehicles (EVs), over the next few years. The earliest generations of EV batteries are still in use, as they typically reach their end-of-life (EOL) in 10-12 years. With the coming surge in demand for LiBs in the EV market, the disposal of EOL batteries is expected to ramp up soon. With proactive regulations regarding disposal and collection of spent batteries, recycling of LiB waste may provide a significant and reliable supply of valuable metals.

There is a pyrometallurgical method for processing EOL LiBs in which smelting is a core process step. The pyrometallurgical method is disadvantageous in certain respects; it presents significant hurdles such as high energy-consumption, costly toxic gas treatment, and loss of lithium to slag. Moreover, the recovered metals are in forms that may be unsuitable for battery production; additional processing may be required to separate recovered materials into individual metal compounds.

The present disclosure relates to a streamlined hydrometallurgical method which overcomes the disadvantages of the prior art to a great extent.

### Brief Summary of the Disclosure

The present disclosure relates, in general, to a simplified, or uncomplicated, hydrometallurgical LiB recycling process which efficiently removes impurities, including cadmium (Cd), to ensure production of battery-grade materials.

According to one aspect of the present disclosure, a method of recovering valuable metals from black mass includes: removal of Cd from a pregnant leach solution (PLS); and then, precipitating and recovering the valuable metals from a PLS at a downstream location.

The present disclosure also relates to a method of recovering valuable metals from black mass which contains Cd. The method includes removal of the Cd from a PLS and subsequent precipitation and recovery of the valuable metals from a PLS, where the valuable metals include one or more of nickel (Ni), manganese (Mn), cobalt (Co), and lithium (Li).

The present disclosure also relates to a method of recovering valuable metals from black mass where the method includes removing Cd from a PLS, and then, downstream from the Cd removal, precipitating and recovering the valuable metals from a PLS. The removal of the Cd may include a step of precipitating an insoluble organo-complex by adding an organic compound material to the PLS.

### Brief Description of the drawings

FIG. 1 is a process flow diagram for an example of a streamlined hydrometallurgical process in accordance with the present disclosure;
FIG. 2 is a more-detailed flow diagram for a portion of the process of FIG. 1;
FIGS. 3 and 4 are graphs showing precipitation of Cd using sodium-2-mercaptobenzothiazole (NaMBT) at different dosages, where FIG. 3 shows concentrations of critical metals remaining in solution at different NaMBT dosages, and FIG. 4 shows concentrations of Cd and phosphorous (P) in solution at different NaMBT dosages;
FIG. 5 is a graph showing the effect of retention time on the effectiveness of Cd removal (that is, the removal of Cd from the PLS) using NaMBT; and
FIGS. 6 and 7 are graphs showing the effect of pH of the PLS on the effectiveness of Cd precipitation by NaMBT, where FIG. 6 shows concentrations of critical metals remaining in solution at an NaMBT dosage of about 400 mg/L and different pH, and FIG. 7 shows copper (Cu) and Cd concentrations at an NaMBT dosage of about 400 mg/L and different pH.

### Detailled Description of the Disclosure

Recycling LiB waste through a hydrometallurgical process has many advantages but presents challenges as well, particularly in the effective removal of impurities. One major hurdle is the complex composition of battery waste, which includes a diverse array of materials derived from electrodes, electrolytes, and separators. These components introduce various contaminants like transition metals, organic solvents, and inorganic compounds which may need to be separated and purified to ensure the recovered materials meet quality standards for reuse.

Cross contamination during the production of black mass from LiB waste is a significant concern that further complicates the efficiency and sustainability of recycling efforts. Due to the varying chemistries and compositions of different battery types, there is a risk of intermixing undesirable elements and impurities and reducing the quality and value of the recovered materials. The inclusion of impurities as a result of combining various types of LiB waste may compromise subsequent extraction processes and poses challenges in achieving consistent product quality.

Cd, a toxic heavy metal, may be present in certain types of LiBs. The inclusion of Cd in the black mass (inadvertent or otherwise) can lead to contamination of recovered materials. According to the present disclosure, a LiB recycling process may be simplified to facilitate the establishment of a sustainable LiB recycling ecosystem. Thus, the present disclosure describes an efficient process for removal of Cd.

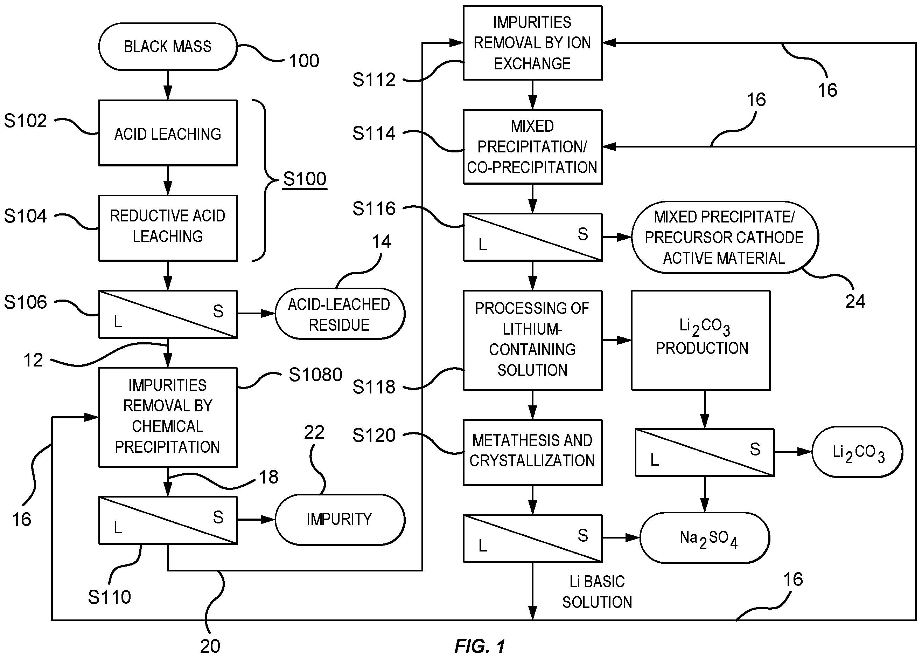

Referring now to the drawings, where like reference numerals designate like elements, there is shown in FIG. 1 an example of a process for recovering and purifying Ni, Mn, Co, and Li from black mass 100. In the illustrated example, the black mass 100 contains Cd as an impurity. If desired, the black mass 100 may be obtained from recycling of LiB waste.

In the example illustrated in FIG. 1, the black mass 100 is acid leached (S100) to form a PLS containing valuable metals such as Ni, Mn, Co, and Li, impurities including Cd, and an insoluble material. In the illustrated example, the leaching process (S100) is a two-stage process including (a) acid leaching (S102) with an acid (for example, sulfuric acid (H₂SO₄)) under suitable conditions and (b) reductive leaching (S104) with a reducing agent (for example, hydrogen peroxide (H₂O₂)) under suitable conditions.

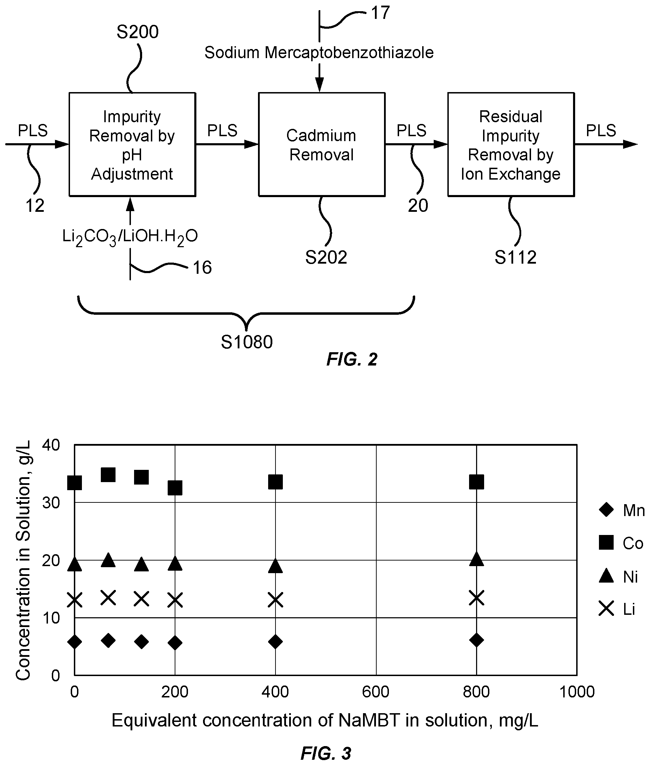

Next, in a separating step (S106), the acidic PLS 12 is separated from an insoluble material or acid-leached residue 14. In subsequent impurity removal steps (S1080), the pH of the acidic PLS 12 is adjusted using a Li basic solution 16 and then Cd is removed from the PLS. The removal steps (S1080) are described in more detail below in connection with FIG. 2.

The resulting pH-adjusted slurry 18 is separated (S110) into an impurity precipitate 22 containing Cd and other impurities and a pH-adjusted PLS 20 containing valuable metals such as Ni, Mn, Co, and Li.

Continuing downstream, the FIG. 1 process includes removing (S112) residual impurities from the pH adjusted PLS 20 by adsorption using an ion exchange resin to form a purified PLS containing valuable metals such as Ni, Mn, Co, and Li. The removing step (S112) may include (a) eluting the adsorbed impurities from the ion-exchange resin using appropriate eluents and (b) regenerating the ion-exchange resin using the Li basic solution 16.

An adjusting step (S114) may then be performed to adjust the pH of the purified PLS containing valuable metals such as Ni, Mn, Co, and Li using the Li basic solution 16 to form a mixed precipitate slurry. A separating step (S116) may be used to separate the mixed precipitate 24 containing Ni, Mn, and Co from a solution containing Li.

If desired, the mixed precipitate 24 can be of high purity (up to battery-grade purity) for use as precursor cathode active material. According to one aspect of the present disclosure, a battery producer may adjust the concentrations of any one or more of the valuable metals by adding corresponding battery-grade metal sulfates prior to the adjusting step (S114) depending on the type of battery the producer desires to make.

Processing steps (S118, S120) may then be performed to produce the Li basic solution 16. If desired, the Li basic solution 16 may be impure LiOH or Li₂CO₃ solution.

In the illustrated process, Li is not co-precipitated with Ni, Mn, and Co in Step S114. Li may be recovered, downstream from Step S116, as Li₂CO₃ (by precipitation during Step S118), or as LiOH.H₂O (by crystallization downstream from Step S120).

The feedstock to the process (that is, the black mass 100) may be a mixture of cathode and anode materials and other materials from recycling of LiB waste or scraps. If desired, the LiB waste or scraps may include at least one of the LiB chemistries lithium iron phosphate (LFP), lithium cobalt oxide (LCO), lithium manganese oxide (LMO), lithium nickel manganese cobalt oxide (NMC), lithium nickel cobalt aluminum oxide (NCA), and lithium titanate (LTO).

The black mass 100 may include at least one of the valuable metals Ni, Co, Mn, and Li, graphite (C), Cd as an impurity, and at least one other impurity such as iron (Fe), aluminum (Al), Cu, phosphorous (P), calcium (Ca), magnesium (Mg), fluoride (F), zirconium (Zr), zinc (Zn), and rare earth elements (REE).

The method illustrated in FIG. 1 includes a process, within steps S1080, for removing Cd as an impurity, as described below in connection with FIG. 2. If desired, the FIG. 1 process may otherwise be the same as the one illustrated in FIG. 1 of United States Patent Application No. 18/323,631, and operated under the same conditions to provide the same advantages described in United States Patent Application No. 18/323,631.

Thus, the present disclosure relates to a streamlined hydrometallurgical method for processing black mass 100 from LiBs, where the method accomplishes efficient removal of Cd. As illustrated in FIG. 1, the method starts with leaching (S100) of black mass 100 in acid to solubilize all metals of interest along with impurities such as Fe, Al, Cu, and Cd.

After removing the leached residue 14, the acidic solution 12 proceeds to a series of impurity removal steps (S1080, S1 12). As illustrated in FIG. 2, the first step (S200) in the series is impurity precipitation by pH adjustment. The first step (S200) is one of the impurity removal steps designated "S1080" in FIG. 1.

In the first step (S200 (FIG. 2)), Fe and most of the Al and Cu are removed from the PLS 12. The PLS then contains the critical metals, Cd, and residual Al and Cu. According to the present disclosure, Cd is removed before precipitation of Ni, Mn, and Co under the condition of the mixed precipitation or cathode precursor process (S114) (FIG. 1). As Cd may completely co-precipitate with Ni, Mn, and Co under the condition of the mixed precipitation or cathode precursor process (S114), as a product impurity, its prior removal (that is, its removal before step S114) is advantageous.

Accordingly, the second step (S202 (FIG. 2)) in the series of impurity removal processes is the removal of Cd from the PLS. The second step (S202) is one of the impurity removal steps (S1080) shown in FIG. 1. The second step (S202) is performed by precipitating Cd as an insoluble organo-complex by the addition of an organic compound material 17 to the PLS.

The organic compound material may belong to a group which includes, but is not limited to, organosulfur, organothiophosphate, and benzothiazole compounds or derivatives, or combinations thereof. The precipitate containing Cd and little to no critical metals may be removed by filtration and exits the process. The purified PLS 20 then proceeds to the third step (S112) of impurity removal.

The third step (S 1 12) in the series of impurity removal processes (S200, S202, S 112) involves the removal of residual Al and Cu impurities by ion exchange. After this third step (S 112), the purified PLS proceeds to mixed precipitation (S114 (FIG. 1)) for the recovery of the critical metals as mixed metal hydroxides.

### Test Data and Results

A screening test involving a number of different organic-based reagents was conducted. A quantity of the reagent equivalent to approximately 400 mg/L in the resulting solution was added to the PLS, agitated at room temperature for at least 10 minutes, and then filtered. The filtrates were analyzed for metals content using inductively coupled plasma optical emission spectroscopy (ICP-OES), a known analytical technique for determining how much of certain elements are in a sample.

As shown in Table 1 (below), the reagents containing dithiophosphinate, dithiophosphate, and/or mercaptobenzothiazole significantly lowered the concentration of Cd in solution with very minimal precipitation of the critical metals.

**Table 1: Treatment of PLS after pH 6 with different reagents at dosage equivalent to 800-1,200 mg/L in solution**

| | Concentration in Solution | | | | | | | |
|---|---|---|---|---|---|---|---|---|
| | Mn g/L | Co g/L | Ni g/L | Li g/L | Al mg/L | Cu mg/L | Cd mg/L | P mg/L |
| PLS at pH 6, untreated | 6.0 | 34.3 | 19.2 | 13.2 | 0.3 | 8 | 30 | 8 |

| *PLS treated with reagents containing:* | | | | | | | | |
|---|---|---|---|---|---|---|---|---|
| Sodium diisobutyl-dithiophosphinate, triisobutylphosphine sulphide, water | 5.9 | 33.8 | 18.8 | 12.9 | 0.2 | 5 | 1 | 12 |
| Sodium diisobutyl-dithiophosphinate, sodium di sec butyl-dithiosphosphate, water, sodium hydroxide, sodium mercaptobenzothiazole | 6.0 | 34.5 | 19.1 | 13.1 | 0.2 | 4 | 4 | 9 |
| Water, sodium diisobutyl dithiophosphate, sodium di sec butyl-dithiosphosphate, isobutanol, butanol sec | 5.9 | 34.3 | 18.9 | 13.0 | 0.2 | 4 | 1 | 11 |
| Sodium hydroxide, Di ethyldithiophosphoric acid sodium salt hydrolyzed, sodium di sec butyl-dithiophosphate, water | 5.9 | 34.3 | 19.0 | 12.9 | 0.3 | 4 | 5 | 40 |
| Sodium diisobutyl monothiophosphate, sodium diisobutyl dithiophosphate, sodium hydroxide, water | 5.8 | 33.7 | 18.6 | 12.7 | 0.3 | 8 | 24 | 29 |
| Water, sodium hydroxide, sodium diisobutyl dithiophosphate | 5.8 | 33.6 | 18.6 | 12.8 | 0.3 | 8 | 27 | 8 |
| Sodium mercaptobenzothiazole in water | 5.9 | 33.8 | 18.7 | 12.9 | 0.2 | 4 | 0 | 8 |

If Cd is not removed from the PLS containing 90 g/L total Ni, Mn, and Co, a 30-mg/L concentration translates to about 160 mg/kg in the mixed precipitate or cathode precursor product. Such a level is very high against a target of < 5 ppm in a desired product. This means that in order to meet a desired specification for Cd, the PLS heading into the mixed precipitation step (S 1 14) should preferably contain a maximum Cd concentration of 0.3 mg/L.

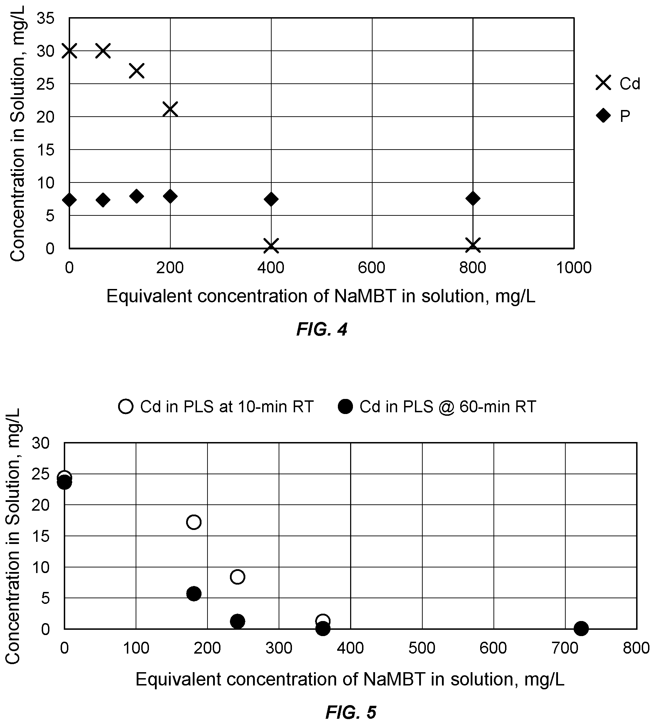

A dosage optimization test run using sodium 2-mercaptobenzothiazole (NaMBT) at different concentrations in the PLS was conducted. FIGS. 3 and 4 are graphs of precipitation of Cd using NaMBT at different dosages, showing the profile of critical metals in the solution (FIG. 3), and (b) the profile of Cd and P in solution (FIG. 4). As shown in FIGS. 3 and 4, Cd was effectively removed at a dosage of 400 mg/L with very minimal precipitation of the critical metals. NaMBT is an aqueous solution of sodium 2-mercaptobenzothiazole.

To determine the effect of the reaction time on the effectiveness of NaMBT in precipitating Cd from the PLS, an experiment comparing 10 and 60 minutes of reaction time was performed. The same dosage of NaMBT was employed. As shown in FIG. 5 (a graph showing the effect of retention time on the effectiveness of Cd removal using NaMBT), a reaction time of 60 minutes was found to be more effective than 10 minutes. These test results provide an opportunity to further reduce the effective dosage of NaMBT.

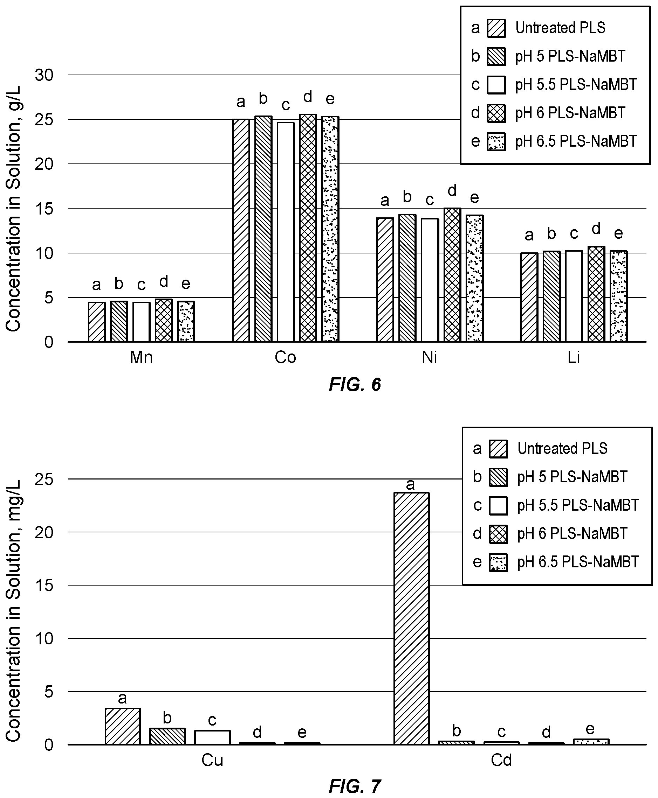

To determine the effect of pH on the effectiveness of NaMBT in removing Cd from the PLS, experiments were conducted wherein the same dosage of NaMBT was added to solutions containing different levels of Cd at a retention time of 60 minutes. FIGS. 6 and 7 show that at the same dosage of NaMBT, Cd was effectively removed from the PLS even at pH 5 with minimal to no co-precipitation of critical metals. As also shown in FIG. 7, NaMBT can precipitate significant amounts of Cu as well, which provides an opportunity for eliminating what would otherwise be a succeeding Cu removal process step.

As used herein, the word "about" (or "approximately") qualifies the associated value by plus or minus 10%. For example, in the present disclosure, "about" 100 units means greater than or equal to 90 units and less than or equal to 110 units.

The present disclosure is not limited to the examples described herein.

## Claims

1. A method of recovering valuable metals from black mass, wherein the black mass includes cadmium (Cd), and wherein the method comprises:
- removing the Cd from a pregnant leach solution (PLS); and
- subsequently, precipitating, and recovering the valuable metals from a pregnant leach solution.

2. The method of claim 1, wherein the valuable metals include one or more of nickel (Ni), manganese (Mn), cobalt (Co), and lithium (Li).

3. The method of claim 1, wherein the removal of the Cd from the PLS includes precipitating an insoluble organo-complex by adding an organic compound material to the PLS.

4. The method of claim 3, wherein the organic compound material includes organosulfur, organothiophosphate, and benzothiazole compounds or derivatives.

5. The method of claim 3, wherein the organic compound material includes dithiophosphinate, dithiophosphate, or mercaptobenzothiazole.

6. The method of claim 3, wherein the adding of the organic compound material includes adding sodium 2-mercaptobenzothiazole (NaMBT) or an aqueous solution of NaMBT.

7. A method of recovering valuable metals from black mass, wherein the black mass includes Cd, and wherein the method comprises:
- removing the Cd from a PLS; and
- subsequently, precipitating, and recovering the valuable metals from a PLS,
wherein the valuable metals include one or more of Ni, Mn, Co, and Li.

8. The method of claim 7, wherein the removal of the Cd includes precipitating an insoluble organo-complex by adding an organic compound material to the PLS.

9. A method of recovering valuable metals from black mass, wherein the black mass includes Cd, and wherein the method comprises:
- removing the Cd from a PLS, wherein the removal of the Cd includes precipitating an insoluble organo-complex by adding an organic compound material to the PLS; and
- subsequently, precipitating, and recovering the valuable metals from a PLS.

10. The method of claim 9, wherein the valuable metals include one or more of Ni, Mn, Co, and Li.

11. The method of claim 9, wherein the organic compound material includes organosulfur, organothiophosphate, and benzothiazole compounds or derivatives.

12. The method of claim 9, wherein the organic compound material includes dithiophosphinate, dithiophosphate, or mercaptobenzothiazole.

13. The method of claim 9, wherein the adding of the organic compound material includes adding sodium 2-mercaptobenzothiazole (NaMBT) or an aqueous solution of NaMBT.

14. The method of claim 9, wherein the step of adding the organic compound material to the PLS causes precipitation of Cu.
